# EUROPÄISCHE PATENTSCHRIFT

(11) **EP 1 012 961 B1**
(45) Veröffentlichungstag und Bekanntmachung des Hinweises auf die Patenterteilung: **06.08.2003**
(21) Anmeldenummer: 97946735.4
(22) Anmeldetag: 21.10.1997
(51) Int. Cl.: H02P 9/30, H02J 7/24

(54) **VORRICHTUNG ZUR REGELUNG DER AUSGANGSSPANNUNG EINES DREHSTROMGENERATORS**
DEVICE FOR SETTING THE OUTPUT VOLTAGE IN A THREE-PHASE ALTERNATOR
DISPOSITIF DE REGLAGE DE LA TENSION DE SORTIE D'UN ALTERNATEUR TRIPHASE

(30) Priorität: 02.12.1996 DE 19649790
(43) Veröffentlichungstag der Anmeldung: 28.06.2000
(73) Patentinhaber: ROBERT BOSCH GMBH, 70442 Stuttgart (DE)
(72) Erfinder: KOHL, Walter, D-74348 Lauffen (DE); JACOB, Wolfgang, D-72160 Horb (DE)
(86) Internationale Anmeldenummer: DE9702427
(87) Internationale Veröffentlichungsnummer: WO98025337

(56) Entgegenhaltungen:
- EP-A- 0 487 927
- DE-A- 3 402 288
- GB-A- 2 233 125

## Beschreibung

Die Erfindung betrifft eine Vorrichtung zur Regelung der Ausgangsspannung eines Drehstromgererators nach der Gattung des Hauptanspruchs. Eine solche Vorrichtung ist beispielsweise aus der DE-A-3 402 288 bekannt.

Bei heute üblichen Spannungsversorgungssystemen in einem Kraftfahrzeug wird ein Drehstromgenerator mit Ständerwicklungen und einer Erregerwicklung eingesetzt, dessen Erregerstrom mit Hilfe eines Spannungsreglers, der eine Regeleinrichtung mit einer Halbleiterschaltung und eine Leistungsstufe mit einem Regeltransistor umfaßt. Die Ansteuerung des Regeltransistors erfolgt so, dass die Ausgangsspannung des Generators einen vorgebbaren Wert beibehält. Bei einer ersten Schaltungsart, die aus der DE-A-3 402 288 bekannt ist, wird der Erregerstrom mit Hilfe von Erregerdioden erzeugt. Der Erregerstrom fließt dabei durch die Erregerwicklung und den Regeltransistor, der von einem Steuerteil des Spannungsregler beeinflußt wird.

Bei anderen Spannungsversorgungssystemen in Kraftfahrzeugen wird die Erregerwicklung an den Generatorausgang B+ angeschlossen, an dem die vom Generator erzeugte Ausgangsspannung auftritt. Die Regelung des Erregerstromes erfolgt bei einem solchen B+ - System wiederum mit Hilfe eines Spannungsreglers, der dann als sogenannter Multifunktionsregler ausgestaltet ist und einen Leistungstransistor umfaßt, der vom Steuerteil des Spannungsreglers in Abhängigkeit von den zugeführten Informationen so angesteuert wird, daß die am Anschluß B+ des Generators auftretende Ausgangsspannung stets den gewünschten Wert aufweist. Bei einem solchen Generator-Spannungsregler-System werden keine Erregerdioden benötigt. Ein Generator-Spannungsregler-System, das einen Multifunktionsregler umfaßt und keine Erregerdioden aufweist ist beispielsweise aus der deutschen Patentanmeldung DE-P 19 532 297.5 bekannt.

### Vorteile der Erfindung

Die erfindungsgemäße Vorrichtung zur Regelung der Ausgangsspannung eines Drehstromgenerators mit den Merkmalen des Anspruchs 1 hat den Vorteil, daß auch bei Einsatz eines D+-Reglers die Erregerdioden entfallen können. Damit läßt sich ein Generator-Spannungsregler-System aufbauen, das von herkömmlichen D+-Reglern ausgeht und zu ebenfalls bereits vorhandenen B+-Spannungsreglern kompatibel ist. Vorteilhaft ist die sehr kleine Ruhestromaufnahme, die sich erzielen läßt.

Vorteilhaft ist weiterhin, daß sich ein Folgeschadenschutz bei Systemfehlern ergibt, wodurch beispielsweise ein Auskochen der Batterie bei unkontrollierter Vollerregung vermieden wird. Weiterhin ist vorteilhaft, daß eine Notregelung durchführbar ist, die bei unkontrollierter Vollerregung eingreift und diese beendet. Weiterhin ist die hohe Spannungsfestigkeit auch im Load-Dump-Fall gegeben. Vorteilhaft ist auch ein Schutz, der bei einem Feldkurzschluß, also beispielsweise bei einer irrtümlichen Masseverbindung der Erregerwicklung auftritt.

Erzielt werden diese Vorteile durch die Vorrichtung zur Regelung der Ausgangsspannung eines Drehstromgenerators mit den Merkmalen des Anspruchs 1. Bei einer solchen Vorrichtung wird ein herkömmlicher D+-Regler, der üblicherweise einen Monolithregler-IC umfaßt über einen sogenannten Smart-Power-High-Side-Schalter an den Anschluß B+ des Generators gelegt. Dieser Schalter ist vorzugsweise als MOS-Transistor mit integrierter Peripherie aufgebaut und stellt einen zweiten integrierten Schaltkreis dar. Der Erregerstrom fließt über den Schalter, die Erregerwicklung und den Regeltransistor nach Masse. Eine Beeinflussung des Stromes durch die Erregerwicklung ist mittels beider integrierter Schaltkreise unabhängig voneinander möglich in Abhängigkeit von zugeführten Informationen.

Weitere Vorteile der Erfindung lassen sich mit den in den Unteransprüchen angegebenen Weiterbildungen erzielen.

### Zeichnung

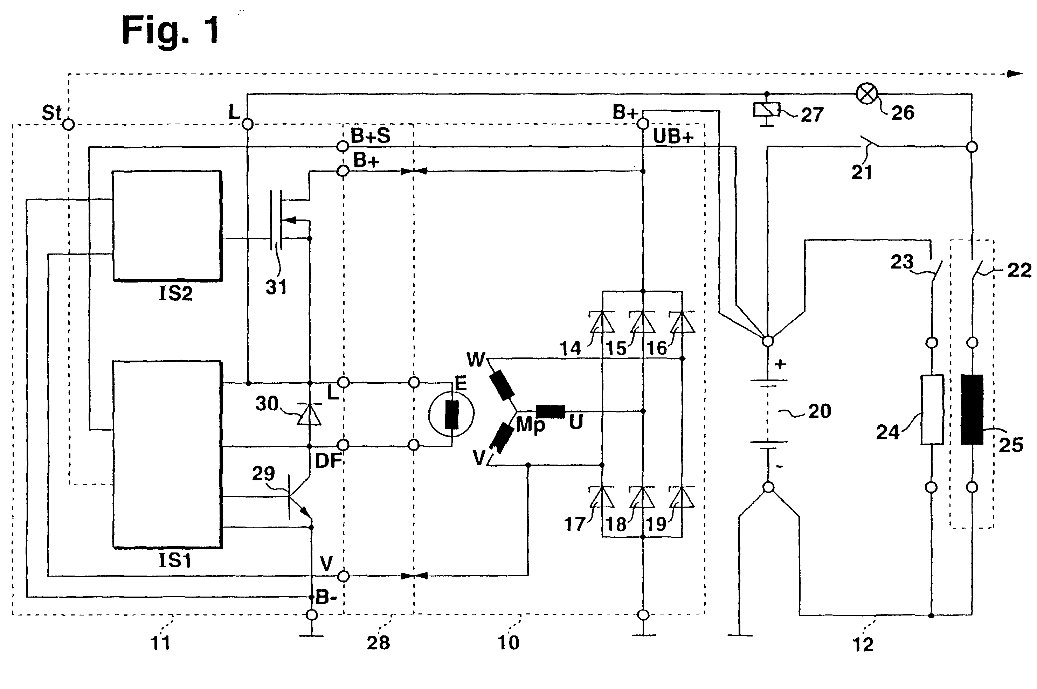

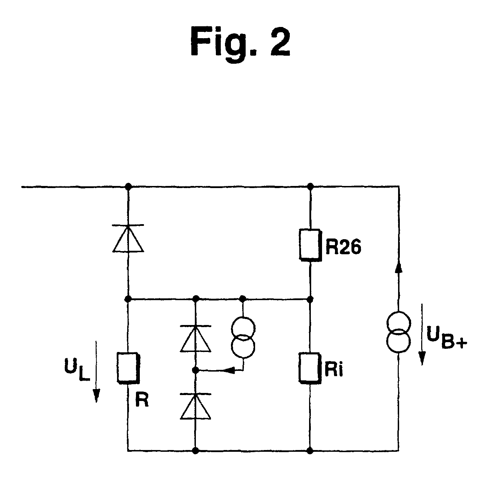

Ein Ausführungsbeispiel der Erfindung ist in Figur 1 der Zeichnung dargestellt und wird in der nachfolgenden Beschreibung näher erläutert. Figur 2 zeigt ein Ersatzschaltbild des Reglers.

### Beschreibung des Ausführungsbeispieles

Der in Figur 1 dargestellte Drehstromgenerator 10 ist zum Betrieb in Kraftfahrzeugen bestimmt und arbeitet mit dem Regler 11 zusammen. Die Ausgangsspannung des Drehstromgenerators 10 ist mit UB+ bezeichnet und wird am Anschluß B+ abgenommen und dient zur Versorgung des Bordnetzes 12.

Der Drehstromgenerator 10 umfaßt in üblicher Weise drei Ständerwicklungen U, V, W, die an einen gemeinsamen Mittelpunkt Mp angeschlossen sind. Die Wicklungen U, V, W sind an eine Gleichrichterbrücke 13 angeschlossen, die sechs Zenerdioden 14, 15, 16, 17, 18, 19 umfaßt und zwischen Masse und dem Anschluß B+ liegt. Als weiterer Bestandteil des Drehstromgenerators 10 ist die Erregerwicklung E dargestellt, die mit dem Regler 11 in Verbindung steht. Das Bordnetz 12 des Fahrzeuges umfaßt wenigstens eine Batterie 20, deren Pluspol mit dem Anschluß B+ des Drehstromgenerators 13 verbunden ist, während der Minusanschluß auf Masse liegt. Die Batterie 20 ist über Schalter 21, 22, 23 mit den Verbrauchern des Bordnetzes 12 verbindbar, wobei lediglich ein Verbraucher 24 sowie der Anlasser 25 dargestellt sind. Weiterhin ist noch die Ladekontrolllampe 26 sowie das Relais 27 vorhanden, wobei die Ladekontrollampe 26 mit den Schaltern 21 und 22 verbunden ist und das Relais 27 zum Anschluß L des Reglers 11 führt.

Der Regler 11, der über den Bürstenhalter 28 über vier Anschlüsse B+, L, DF und V mit dem Drehstromgenerator 10 in Verbindung steht, umfaßt zwei integrierte Schaltkreise IS1 und IS2 sowie einen Leistungstransistor 29, eine Diode 30 und einen Feldeffekttransistor 31. Dieser Feldeffekttransistor 31 ist dabei als Schalter beschaltet. Er liegt zwischen dem Anschluß B+ des Bürstenhalters 28 und dem Anschluß L, der auf die Erregerwicklung des Drehstromgenerators führt. Die Ansteuerung des Feldeffekttransistor 31 erfolgt vom integrierten Schaltkreis IS2. Der Regeltransistor 29 ist mit seinem Kollektor in üblicher Weise über den Anschluß DF mit der Erregerwicklung E des Drehstromgenerators 10 verbunden. Der Emitter des Regeltransistors 29 liegt über den Anschluß B- auf Masse. Die Ansteuerung des Regeltransistors 29 wird vom integrierten Schaltkreis IS1 durchgeführt. Dazu werden dem integrierten Schaltkreis IS1 die für die Regelung relevanten Größen zugeführt, beispielsweise Informationen bezüglich des Erregerstromes über den Anschluß DF, Informationen bezüglich der Ausgangsspannung des Drehstromgenerators über den Anschluß B+S des Bürstenhalters 28 und weitere Informationen bezüglich des Zustandes der Ladekontrollampe über den Anschluß L. Die Diode 30 liegt schließlich zwischen den Anschlüssen L und DF, sie soll einen direkten Stromschluß vom Feldeffekttransistor 31 zum Regeltransistor 29 verhindern. Bei dem in Figur 1 dargestellten Ausführungsbeispiel besteht der Regler 11 also aus einem D+-Regler heutiger Ausführung, vorzugsweise aus einem Monolithregler IC, der die Bezeichnung IS1 trägt. Der integrierte Schaltkreis IS1 kann über einen Smart-Power-High-Side-Schalter, vorzugsweise einen MOS-Transistor mit integrierter Peripherie (PPS) an den Anschluß B+ des Generators geschaltet werden. Die integrierte Peripherie zum Feldeffekttransistor 31 wird als integrierter Schaltkreis IS2 bezeichnet.

Der integrierte Schaltkreis IS1 ist bezüglich der Regelspannung dahingehend angepaßt, daß zwischen dem Anschluß B+ des Generators und der Istwerterfassung im Regelbetrieb eine Spannung über dem integrierten Schaltkreis IS2 abfällt, welche durch Wahl eines hinreichend kleinen Durchlaßwiderstandes niedrig gehalten wird. Beispielsweise kann die Dimensionierung so erfolgen, daß der Widerstand im Schaltzustand "Ein" RDSON gleich 40 mΩ beträgt. Der Spannungsabfall UDS ist dann kleiner als 220 mV bei einem Strom von 5,5 A.

Der integrierte Schaltkreis IS2 wird in der Hauptsache über die Spannung UV gesteuert, darüber hinaus erfolgt eine Auswertung der Spannung UB+ zur Über- und Unterspannungserkennung. Weiterhin wird der Strom IDS ausgewertet zur Kurzschlußerkennung und gegebenenfalls wird noch die Spannung UL zur Erkennung ob der Zündschalter 21 geschlossen ist, ausgewertet. Bei kleiner Lampenleistung, also wenn die Ladekontrollampe 26 beispielsweise als LED ausgestaltet ist, wird zusätzlich der Vorerregerstrom angehoben. Bei Zuführung einer Information bezüglich einer Übertemperatur kann eine Übertemperaturabschaltung ausgelöst werden.

Bei geöffnetem Zündschalter ist die Spannung UV etwa 0. Der integrierte Schaltkreis IS2 ist dann abgeschaltet. Der aufgenommene Ruhestrom beträgt weniger als 100 Mikroampère. Zur Kompensation eventueller Sperrströme der Hauptstromdioden 14 - 19 der Gleichrichterbrücke 13 des Drehstromgenerators 10 ist eine Ableitung nach Masse vorgesehen.

Wenn der Zündschalter geschlossen ist und der Motor stillsteht erfolgt die Vorerregung, also die Zufuhr des Erregerstromes in die Erregerwicklung über die Ladekontrollampe 26. Der integrierte Schaltkreis IS2 ist abgeschaltet und die Verhältnisse entsprechen denen in einem herkömmlichen D+-Reglersystem. Um einen definierten Vorerregerstrom einzustellen ist zusätzlich eine aktives teilweises Einschalten des integrierten Schaltkreises IS2 möglich.

Soll der Motor gestartet werden, schaltet der integrierte Schaltkreis IS2 ein sobald die Spannung UV eine intern eingestellte Schwelle übersteigt. Die Auswertung erfolgt dabei beispielsweise mit Hilfe einer Spitzenwertgleichrichtung. Alternativ oder zusätzlich ist eine Drehzahl- bzw. Frequenzauswertung und ein damit verknüpftes Einschalten des integrierten Schaltkreises IS2 möglich. Soll der Motor ausgeschaltet werden, schaltet der integrierte Schaltkreis IS2 ab.

Die Erkennung, ob der Zündschalter ein- oder ausgeschaltet ist, kann auch über einen zusätzlichen Anschluß an Klemme KL.15 erfolgen. Dann erfolgt ein sofortiges Abschalten des integrierten Schaltkreises IS2 sobald registriert wird, daß - die Zündung ausgeschaltet wird.

Bei geeigneter Ausgestaltung des integrierten Schaltkreises IS1 können Batterieparameter ermittelt werden und eingespeist werden, beispielsweise die Batterietemperatur oder die Batteriespannung oder der Batterieladezustand. Es lassen sich auch weitere Zusatzfunktionen realisieren. Im normalen Regelbetrieb schaltet der integrierte Schaltkreis IS2 neben dem integrierten Schaltkreis IS1 auch ein Relais 27 oder den Schalter 23 gegen Anschluß B+, so daß andere Verbraucher einschaltbar sind.

Mit der in Figur 1 dargestellten Vorrichtung zur Spannungsregelung läßt sich eine Reihe von Fehlerfällen erkennen und es treten Schutzmaßnahmen ein, falls ein Fehler auftritt. Im einzelnen lassen sich Auswirkungen bei folgenden Fehlern vermeiden:

### 1. Verpolung der Batterie 20

Bei einer Verpolung der Batterie 20, also bei Vertauschen der Anschlüsse an die Batteriepole + und - wird der Generator und der Spannungsregler durch die Hauptstromdioden bzw. Zenerdioden geschützt. Eine Strombegrenzung erfolgt durch den Widerstand des Relais.

### 2. Lastabschaltung

Übersteigt die Spannung am Anschluß B+ und/oder am Anschluß V eine im integrierten Schaltkreis IS2 eingestellte Referenzspannungsschwelle, schaltet der integrierte Schaltkreis IS2 den Feldeffekttransistor 31 ab und schützt so den Regler. Die Spannung am Anschluß L wird bestimmt durch die Spannung UB+, den Widerstand der Ladekontrollampe 26, den Widerstand des Relais 27 sowie den Innenwiderstand Ri des Reglers 11. Die Bestimmung der Spannung UL kann mit Hilfe der in Figur 2 dargestellten Schaltung erläutert werden. In dieser Schaltung ist die Spannung UB+ als Spannungsquelle eingetragen. Weiterhin ist der Widerstand der Lampe 26 als R26 eingetragen und der Innenwiderstand des Reglers als Ri. Der Widerstand RL ist der Lastwiderstand.

Beträgt der Innenwiderstand RI des Reglers IS1 60Ω und der Innenwiderstand einer 4-Watt-Ladekontrollampe 36Ω und ist kein Relaiswiderstand vorhanden, ergibt sich eine Spannung UL von 21 Volt, sofern die Spannung UB+ 34 Volt beträgt. Dies bedeutet, daß ein Einsatz des Reglers 11 auch in 28 Volt Bordnetzen oder bei entsprechender Anpassung des Innenwiderstandes des IS1 in Bordnetzen bis zu UB+(max)= 80 Volt möglich ist. Es muß hier allerdings dafür gesorgt werden, daß kein zu großer Spannungsabfall über der Lampe auftritt, da dieser sonst zur Zerstörung der Ladekontrollampe führen könnte.

Die Überspannungsauswerteschaltung im IS2 ist so ausgelegt, daß Teillastabschaltungen im Bordnetz nicht zu einem Aufleuchten der Ladekontrollampe führen. Der Anschluß V- des IS2 ist hochohmig geschützt.

### 3. Kurzschluß an Anschluß L nach Masse

Eine Strombegrenzung bzw. Stromabschaltung erfolgt im IS2. Die Ladekontrollampe leuchtet, sofern der Zündschalter eingeschaltet ist und es ist im Betrieb keine Erregung möglich.

### 4. Kurzschluß von Anschluß L nach Anschluß B+

Es erfolgt eine normale Regelung bei etwas niedrigerer Spannung. Die Ladekontrollampe leuchtet nicht, sofern der Zündschalter eingeschaltet ist.

### 5. Überspannungsimpuls an Anschluß L durch eine Inversdiode im IS2 wird die Spannung nach der Spannung an B+ geklammert, ein Überspannungsimpuls hat daher keine weiteren negativen Auswirkungen.

### 6. Negativer Spannungsimpuls an Anschluß L

Es erfolgt eine Klammerung nach Masse durch eine Inversdiode des IS1.

### 7. Kurzschluß zwischen Anschluß DF und Masse

Die auftretende Überspannung wird detektiert und der IS2 schaltet ab. Es erfolgt eine Resterregung über die Verbindung durch die Ladekontrollampe 26, die Ladekontrollampe leuchtet. Mittels einer Hystereseschaltung ist ein Notregelbetrieb durch den IS2 möglich. Ein solcher Fehler kann bei den heute üblichen Reglern zu einem unkontrollierten Spannungsanstieg führen und die Batterie schädigen.

### 8. Kurzschluß zwischen Anschluß DF und Anschluß L

Der IC1 wird durch eine vom IS2 durchgeführte Strombegrenzung bzw. Stromabschaltung geschützt. Nach der Entregung ist die Spannung UV kleiner als die Abschaltschwelle im IS2. Es erfolgt eine Anzeige durch die Ladekontrollampe.

### 9. Kurzschluß von Anschluß DF nach Anschluß B+

Ein solcher Kurzschluß führt zur Zerstörung der Feldendstufe. Eine Anzeige erfolgt über eine Änderung des Innenwiderstandes des IS1. Durch Ergänzung einer kurzschlußfesten Feldendstufe läßt sich eine solche Zerstörung in einer erweiterten Version der in Figur 1 dargestellten Lösung vermeiden.

### 10. Kurzschluß von Anschluß B+ nach Masse

Bei einem Kurzschluß zwischen B+ und Masse bricht die Bordnetzspannung zusammen. Eine Schädigung des Reglers tritt nicht auf.

### 11. Kurzschluß von Anschluß V nach Masse

Bei einem solchen Kurzschluß schaltet der IC2 ab. Der Stromfluß durch den Feldeffekttransistor 31 wird beendet und es folgt eine Fehleranzeige mit Hilfe der Ladekontrollampe 26.

### 12. Kurzschluß zwischen Anschluß V und Anschluß B+

Der Regler funktioniert weiterhin entsprechend der Höhe der Spannung am Anschluß V bzw. B+.

### 13. Kurzschluß zwischen Anschluß V und Anschluß L

Der IS2 wird geschützt durch eine Strombegrenzung bzw. Stromabschaltung, die im IS2 selbst durchgeführt wird.

### 14. Kurzschluß zwischen Anschluß V und Anschluß DF

Ein solcher Kurzschluß führt zu einer Zerstörung der Feldendstufe, also des Transistors 29. Eine solche Zerstörung wird angezeigt durch eine Änderung des Innenwiderstandes im integrierten Schaltkreis IC1.

### 15. Unterbrechung am Anschluß B+

Wird die Verbindung zwischen dem Anschluß B+ und dem Bordnetz unterbrochen, folgt eine Anzeige durch die Ladekontrollampe und eine Teilerregung des Generators über den Teil der Schaltung, der über die Ladekontrollampe 26 führt.

### 16. Unterbrechung einer Masseleitung

Es ist keine Reglerfunktion möglich. Eine Anzeige über den Anschluß V ist möglich.

### 17. Unterbrechung am Anschluß V

Bei einer Unterbrechung am Anschluß V erfolgt eine Anzeige über die Ladekontrollampe 26 und eine Teilerregung über den Teil der Schaltung, der über die Ladekontrollampe führt.

### 18. Unterbrechung an Klemme L am Generator

Es erfolgt eine Anzeige über die Ladekontrollampe 26 aufgrund des Innenwiderstandes Ri des integrierten Schaltkreises IS1.

### 19. Unterbrechung an Anschluß L extern

Es erfolgt keine Anzeige. Die Angehdrehzahl des Generators erhöht sich in Folge der fehlenden Vorerregung. Nach Erreichen der Angehdrehzahl erfolgt eine normale Generatorregelung.

### 20. Unterbrechung an Anschluß DF

Es ist keine Erregung des Generators möglich, da kein Strom durch die Erregerwicklung E fließen kann. Eine Anzeige erfolgt über den Innenwiderstand Ri des integrierten Schaltkreises, aufgrund dieses Innenwiderstandes spricht die Ladekontrollampe 26 an. Im normalen Regelbetrieb ist ein Lichtbogen möglich, eine Zerstörung des Reglers ist nicht möglich.

## Patentansprüche

1. Vorrichtung zur Regelung der Ausgangsspannung eines Drehstromgenerators (10) mit Ständerwicklungen (U, V, W) und einer Erregerwicklung (E), mit einem Spannungsregler (11), der eine Steuerstufe mit einem ersten integrierten Regelschaltkreis (IS1) und eine Leistungsstufe mit einem Regeltransistor (29) umfaßt, wobei die Steuerstufe den Regeltransistor (29)zur Beeinflussung des Stromes durch die Erregerwicklung (E) so beeinflußt, dass die Ausgangsspannung auf einen vorgebbaren Wert gehalten wird, **dadurch gekennzeichnet, dass** der erste integrierte Schaltkreis (IS1) über einen Halbleiter-Schalter an den Anschluß (B+) des Drehstromgenerators (10) schaltbar ist, wobei der Halbleiter-Schalter einen integrierten Schaltkreis (IS2) umfaßt, der einen Smart-Power-High-Side-Schalter (31) ansteuert.

2. Vorrichtung nach Anspruch 1, **dadurch gekennzeichnet, dass** ein Drehstomgenerator ohne Erregerdioden eingesetzt wird.

3. Vorrichtung nach Anspruch 1 oder 2, **dadurch gekennzeichnet, dass** der integrierte Schaltkreis (IS1) einen Monolithregler-IC aufweist.

4. Vorrichtung nach einem der vorhergehenden Ansprüche, **dadurch gekennzeichnet, dass** der Smart-Power-High-Side-Schalter (31) ein als Schalter beschalteter MOS-Feldeffekt-Transistor ist.

5. Vorrichtung nach einem der vorhergehenden Ansprüche, **dadurch gekennzeichnet, dass** der integrierte Schaltkreis (IS1) und/oder der integrierte Schaltkreis (IS2) zur Informationszufuhr mit den Anschlüssen (B+S), (L), (DF), (D) und (V) in Verbindung stehen.

## Claims

1. Apparatus for regulating the output voltage of a three-phase generator (10) having stator windings (U, V, W) and having a field winding (E), having a voltage regulator (11) which has a control stage with a first integrated regulating circuit (IS1) and a power stage with a regulating transistor (29), with the control stage influencing the regulating transistor (29) in order to influence the current through the field winding (E) such that the output voltage is kept at a value which can be predetermined, **characterized in that** the first integrated circuit (IS1) can be connected via a semiconductor switch to the connection (B+) of the three-phase generator (10), with the semiconductor switch comprising an integrated circuit (IS2) which drives a smart power high-side switch (31).

2. Apparatus according to Claim 1, **characterized in that** a three-phase generator without any field diodes is used.

3. Apparatus according to Claim 1 or 2, **characterized in that** the integrated circuit (IS1) has a monolithic regulator (IC).

4. Apparatus according to one of the preceding claims, **characterized in that** the smart power high-side switch (31) is an MOS field-effect transistor connected as a switch.

5. Apparatus according to one of the preceding claims, **characterized in that** the integrated circuit (IS1) and/or the integrated circuit (IS2) are/is connected to the connections (B+S), (L), (DF), (D) and (V), in order to supply information.

## Revendications

1. Dispositif de régulation de la tension de sortie d'un alternateur triphasé (10) comportant des enroulements de stator (U, V, W) et un enroulement d'excitation (E),
un régulateur de tension (11) comprenant un étage de commande avec un premier circuit intégré de régulation (IS1) et un étage de puissance avec un transformateur de régulation (29),
l'étage de commande influençant le transistor de régulation (29) pour influencer le courant par l'enroulement d'excitation (E) pour que la tension de sortie soit maintenue à une valeur prédéterminée,
**caractérisé en ce que**
le premier circuit intégré (IS1) est commuté par un commutateur semi-conducteur sur le branchement (B+) de l'alternateur triphasé (10),
le commutateur semi-conducteur comprenant un circuit intégré (IS2) qui commande un commutateur de puissance côté haut, intelligent (31).

2. Dispositif selon la revendication 1,
**caractérisé par**
un alternateur de courant triphasé sans diode d'excitation.

3. Dispositif selon la revendication 1 ou 2,
**caractérisé en ce que**
le circuit intégré (IS1) comporte un régulateur monolithique intégré.

4. Dispositif selon l'une des revendications précédentes,
**caractérisé en ce que**
l'interrupteur (31) est un transistor à effet de champ MOS branché comme commutateur.

5. Dispositif selon l'une des revendications précédentes,
**caractérisé en ce que**
le circuit intégré (IS1) et/ou le circuit intégré (IS2) sont reliés aux bornes (B+S), (L), (DF), (D) et (V) pour fournir des informations.
